(19) Europäisches Patentamt
European Patent Office
Office européen des brevets

(11) EP 3 142 070 A1

(12) **EUROPEAN PATENT APPLICATION**

(43) Date of publication:
15.03.2017 Bulletin 2017/11

(51) Int Cl.:
*G06T 7/00* (2017.01)

(21) Application number: 15184647.4

(22) Date of filing: 10.09.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicants:
• Agfa HealthCare
1150 Vienna (AT)
• VRVis Zentrum für Virtual Reality und Visualisierung
1220 Vienna (AT)

(72) Inventors:
• Novikov, Alexey
2640 Mortsel (BE)
• Major, David
2640 Mortsel (BE)
• Wimmer, Maria
2640 Mortsel (BE)
• Buehler, Katja
2640 Mortsel (BE)

(74) Representative: Verbrugghe, Anne Marie L.
Agfa HealthCare
IP Department 3802
Septestraat 27
2640 Mortsel (BE)

(54) **METHOD, APPARATUS AND SYSTEM FOR SEGMENTATION OF ANATOMICAL STRUCTURES IN MEDICAL IMAGES**

(57) The invention relates to a method and an according apparatus and system for segmentation of anatomical structures in medical images, wherein an anatomical structure represented in a medical image is segmented by applying an algorithm based on a morphological active contour without edges (MACWE) to the medical image, wherein in the algorithm based on the morphological active contour without edges one or more features relating to a surrounding and/or context of the anatomical structure represented in the medical image are considered.

(a) t = 1  (b) t = 3  (c) t = 5  (d) t = 9  (e) t = 16  (f) t = 24

Fig. 7

**Description**

The present invention relates to a method and a corresponding apparatus and system for segmentation of anatomical structures in medical images according to the independent claims.

Accurate segmentation of anatomical structures in medical images is of high interest in the current clinical practice because it can help to timely diagnose and plan further treatment of diseases. For instance, human vessels are often affected by vascular diseases, such as atherosclerosis and stenosis, which can lead to more serious problems, including heart attack, stroke, or even death. Intervertebral discs often suffer from degeneration that can cause chronic pain if left untreated and therefore affect the quality of one's life. Robust and precise methods for internal structures segmentation can be helpful to facilitate the physicians to detect such diseases.

It is an object of the invention to provide a method, apparatus and system allowing for a robust and precise segmentation of anatomical structures in medical images.

This object is achieved by the method, apparatus and system according to the independent claims.

In a method for segmentation of anatomical structures in medical images according to an aspect of the invention an anatomical structure represented in a medical image is segmented by applying an algorithm based on a morphological active contour without edges (MACWE) to the medical image, wherein in the algorithm based on MACWE one or more features relating to a surrounding and/or context of the anatomical structure represented in the medical image are considered.

An apparatus for segmentation of anatomical structures in medical images according to another aspect of the invention comprises an image processing unit which is configured to segment an anatomical structure represented in a medical image by applying an algorithm based on a morphological active contour without edges (MACWE) to the medical image, wherein in the algorithm based on MACWE one or more features relating to a surrounding and/or context of the anatomical structure represented in the medical image are considered.

A system for segmentation of anatomical structures in medical images according to yet another aspect of the invention comprises a medical imaging apparatus configured to acquire medical images of anatomical structures, in particular blood vessels and/or intervertebral discs, and an apparatus according to an aspect of the invention.

Aspects of the invention are based on the approach to use a, preferably automated and/or learning-based, morphological active contour model for segmentation of anatomical structures in medical images, like segmentation of intervertebral discs in 2D and 3D magnetic resonance (MR) images or segmentation of blood vessel lumen in 2D and 3D computed tomography angiography (CTA) images. Specifically, a morphological active contour without edges (MACWE) is used, which is particularly effective for medical image segmentation as it is fast and does not suffer from numerical stability problems.

In order to enhance its performance, the standard MACWE is modified by using features of an area surrounding the anatomical structure represented in the image to drive the MACWE towards the borders of the anatomical structure.

Alternatively, or additionally, the standard MACWE algorithm can be combined with a supervised machine learning method, in which a model is trained with field-specific contextual features and/or with features of an area surrounding the anatomical structure represented in the image. The learned features are used to drive the MACWE towards the desired borders. In this way, the standard MACWE is modified by plugging in any corresponding machine learning classifier trained preliminarily on the field-specific contextual features.

Each of the aforementioned modifications of the MACWE algorithm makes it overcome possible limitations of the standard MACWE, like leaking out of the desired region or under-segmentation, under certain circumstances. Besides, each of the modified MACWE algorithms is more generic and less sensitive to surroundings of the anatomical structure represented in the image.

In summary, the invention allows for a robust and precise segmentation of anatomical structures in medical images.

In the context of the invention, the term "segmentation" relates to finding, based on the contents of a medical image, a contour of an anatomical structure, e.g. a vessel or an intervertebral disc, serving as a boundary to separate the anatomical structure from the image.

Preferably, the one or more features relating to the surrounding and/or context of the anatomical structure are considered by classifying the surrounding and/or context of the anatomical structure represented in the medical image. Hereby, the surrounding and/or context of the anatomical structure is assigned to one of at least two classes relating to properties of the surrounding and/or context of the anatomical structure, and the class, to which the surrounding and/or context of the anatomical structure represented in the medical image has been assigned, is considered in the MACWE algorithm. By considering the result of a classification of the surrounding and/or context, the MACWE segmentation of anatomical structures is simple and yet robust and precise.

It is further preferred that the surrounding and/or context of the anatomical structure represented in the medical image is classified by applying a classifier to the medical image. It is preferred that the classifier is trained with feature vectors relating to a surrounding and/or a context of anatomical structures in a set of training images. In this way, a particularly robust and reliable segmentation of anatomical structures is achieved.

Preferably, for vessel lumen segmentation, the feature vectors contain one or more of the following features, which are calculated for each training position:

- Relative intensity difference between the intensity at the given point preferably at the very center of the vessel and the intensity at the current training position.

- Entropy value, wherein high entropies correspond to areas with high variations of intensities.

- Maximal intensity value at the neighborhood of the current training position.

- Distances from the current training position to the available point within the vessel lumen preferably at its center.

Preferably, for intervertebral disc segmentation, the feature vectors contain one or more of the following features, which are calculated for each training position:

- Two scaled directional intensity derivatives.

- Distances from the current training position to the available point within the disc preferably at its center.

Preferably, the classifier is a multi-label classifier, which has multiple different labels. By means of the multi-label classifier the surrounding and/or the context of the anatomical structure represented in the medical image is assigned to one of two or more, in particular three or more, different classes. In this way, the characteristics of the surrounding and/or context of the anatomical structure are considered in the MACWE segmentation algorithm with particularly high accuracy.

Using a multi-label classifier is particularly preferred and advantageous for intervertebral disc segmentation in 2D and 3D images, in particular MRI images and/or blood vessel segmentation in 2D computed tomography angiography (CTA) images.

Alternatively, or additionally, the classifier is a binary classifier, which has two different labels. Hereby, the surrounding and/or the context of the anatomical structure represented in the medical image is assigned to one of two different classes. By using a two-level classifier good segmentation results are achieved, albeit the modification of the standard MACWE is kept particularly simple, because in the algorithm only two different cases of surrounding and/or context classes have to be considered.

It is, moreover, preferred that the algorithm based on MACWE comprises the step of applying a morphological operator to the medical image, wherein the morphological operator applied to the medical image depends on the result of the classification of the surrounding and/or the context of the anatomical structure represented in the medical image. A morphological operator is a monotone contrast-invariant and translation-invariant operator. For example, dilation and erosion operators are morphological operators. Preferably, the morphological operator comprises and/or corresponds to an image attachment term of the Euler-Lagrange equation for the implicit version of an active contour without edge (ACWE) functional of a curve C.

Further advantages, features and examples of the present invention will be apparent from the following description of following figures:

Fig. 1    shows an example of an apparatus and a system according to the invention;

Fig. 2    shows (a) an original image with a bounding box around the vessel cross-section, and (b) an extracted patch around the vessel cross-section with positive (bright boxes) and negative (dark boxes) training sample regions;

Fig. 3    shows (a) a patch around a vessel cross-section with calcifications at the vessel borders, and (b) an entropy map for the whole patch;

Fig. 4    shows (a) a sagittal plane for the lumbar spine, and (b) a sagittal plane for the lumbar spine with bounding boxes for the image patches around each disc;

Fig. 5    shows (a) an extracted patch around a disc, and (b) an extracted patch around the disc with positive (bright boxes) and negative (dark boxes) training samples regions;

Fig. 6    illustrates the convergence of the algorithm on vessel data (t corresponds to the current iteration). Top row:

(dark) ground-truth mask, (bright) segmented by the algorithm. Bottom row: (dark) contour of the ground-truth mask, (bright) contour of the segmentation by the algorithm; and

Fig. 7    illustrates the convergence of the algorithms on the spine data (t corresponds to the current iteration). Top row: (dark) ground-truth mask, (bright) segmented by the algorithm. Bottom row: (dark) contour of the ground-truth mask, (bright) contour of the segmentation obtained by the algorithm.

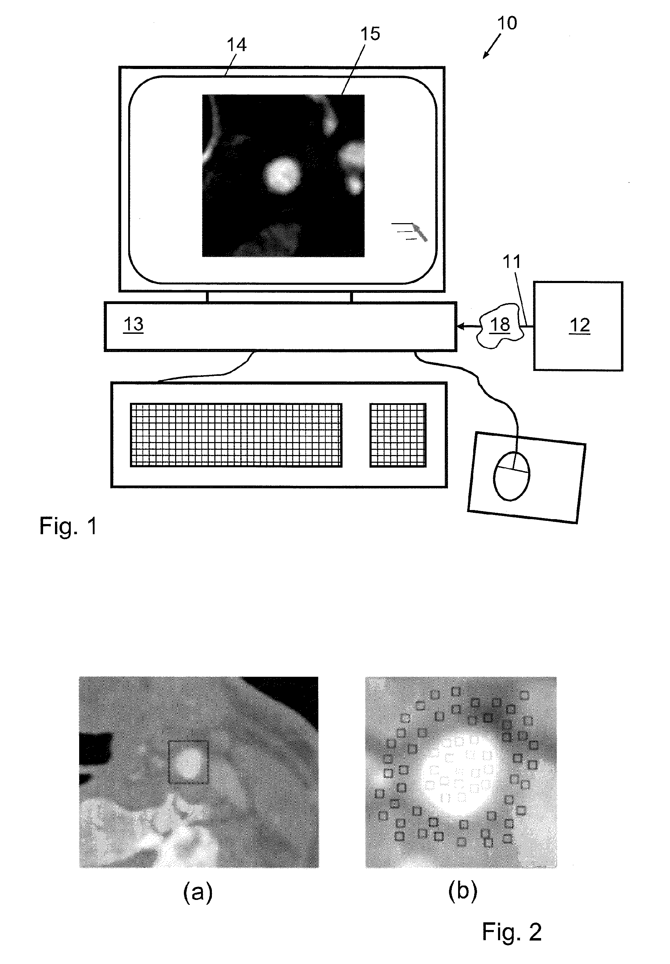

Fig. 1 shows an example of an apparatus 10 and a system according to the invention. The system comprises a medical imaging apparatus 12, in particular a computed tomography (CT) or magnetic resonance (MR) imaging apparatus, which is configured to acquire one or more images, e.g. a plurality of two-dimensional images or a three-dimensional image, of a human or animal body and to generate a corresponding medical image data set 11. Preferably, the medical imaging apparatus 12 is configured to acquire and/or generate CT or MR images of the spine or parts of the spine of a human or animal body and/or computed tomography angiography (CTA) or magnetic resonance angiography (MRA) images.

The apparatus 10 comprises an image processing unit 13, e.g. a workstation or a personal computer (PC), which is configured to process the image data set 11. Preferably, the image data set 11 is transferred from the medical imaging apparatus 12 to the image processing unit 13 via a data network 18, e.g. a local area network (LAN) or wireless LAN (WLAN) in a hospital environment or the internet.

The image processing unit 13 is preferably configured to generate a volume reconstruction and/or a slice image 15 of the image data set 11 on a display 14, e.g. a TFT screen of the workstation or PC, respectively.

The image processing unit 13 is further configured to perform image processing according to aspects of the present invention. Preferably, the image processing unit 13 is configured to segment an anatomical structure represented in the image 15 by applying an algorithm based on a morphological active contour without edges (MACWE) to the medical image, wherein in the algorithm based on MACWE one or more features relating to a surrounding and/or context of the anatomical structure represented in the medical image are considered.

This will be elucidated by means of examples of methods and/or algorithms in the following.

I. First Example

The segmentation method according to a first example is based on an active contour without edges (ACWE) described by T. F. Chan, B. Sandberg, and L. A. Vese, Active contours without edges for vector-valued images, in: Journal of Visual Communication and Image Representation, 11 (2), 130 - 141, 2000, which is approximated by applying morphological operators (MACWE) as described by P. Marquez-Neila, L. Baumela, and L. Alvarez, A morphological approach to curvature-based evolution of curves and surfaces, IEEE Transactions on Pattern Analysis and Machine Intelligence, 36 (1), 2 - 17, 2014, which are both incorporated by reference herewith. According to an aspect of the invention, the MACWE segmentation algorithm is further modified and enhanced by machine learning approaches as elucidated in detail in the following.

Morphological Active Contour Without Edges

Chan et al. define an energy functional that uses the content of the interior and exterior regions of the curve. As the curve is not necessarily closed, under the "interior region" all pixels belonging to the curve are meant.

The Active Contour Without Edges (ACWE) functional of a curve $C$ is defined as follows:

$$F(c_1,c_2;C) = \mu \cdot Length(C) + v \cdot Area(inside(C)) + \lambda_1 \int_{inside(C)} \|I(x)-c_1\| dxdx + \lambda_2 \int_{outside(C)} \|I(x)-c_2\| dxdx \quad (1)$$

where $\mu \geq 0$, $v \geq 0, \lambda_1, \lambda_2 > 0$ are fixed parameters, $c_1$ and $c_2$ are the mean of the values of a given image $I(x)$ inside and outside of the contour $C$.

For determining the contour of an object, e.g. an anatomical structure, represented in an image the following minimization problem is solved:

$$\inf_{c_1,c_2,C} F(c_1,c_2,C) \quad (2)$$

with contour $C$ and values $c_1$ and $c_2$ being the mean of the value inside the curve and outside, respectively:

$$c_1 = \frac{\int_{inside(C)} I(x)dx}{\int_{inside(C)} dx} \quad (3)$$

$$c_2 = \frac{\int_{outside(C)} I(x)dx}{\int_{outside(C)} dx} \quad (4).$$

The Euler-Lagrange equation for the functional

$$\frac{\partial u}{\partial t} = |\nabla u|\left(\mu\, div\left(\frac{\nabla u}{|\nabla u|}\right) - v - \lambda_1(I - c_1)^2 + \lambda_2(I - c_2)^2\right) \quad (5)$$

includes the smoothing, the balloon force and the image attachment terms.

The morphological approximation of the ACWE algorithm, that is the MACWE algorithm, as described by P. Marquez-Neila et al. (cited above) comprises the following steps:

The dilation and erosion operators are defined as

$$D_h u(x) = \sup_{y \in hB(0,1)} u(x + y) \quad (6)$$

$$E_h u(x) = \inf_{y \in hB(0,1)} u(x + y) \quad (7).$$

Then it is proceeded as follows:

a) the balloon force is applied first

$$\begin{cases} (D_h u^n)(x), & if\ v > 0 \\ (E_h u^n)(x), & if\ v < 0 \\ u^n(x), & otherwise \end{cases} \quad (8)$$

b) followed by the image attachment term

$$K^{n+\frac{1}{3}} = \left|\nabla u^{n+\frac{1}{3}}\right|\left(\lambda_1(I - c_1)^2 - \lambda_2(I - c_2)^2\right)(x) \quad (9)$$

$$u^{n+\frac{1}{3}} = \begin{cases} 1, & \text{if } K^{n+\frac{1}{3}}(x) < 0 \\ 0, & \text{if } K^{n+\frac{1}{3}}(x) > 0 \\ u^{n+\frac{1}{3}}, & \text{otherwise} \end{cases}$$

$$(10)$$

c) and finalized by the smoothing operator

$$u^{n+1}(x) = \left( \left( SI_d \circ IS_d \right)^\mu u^{n+\frac{2}{3}} \right)(x)$$

$$(11)$$

The term $(SI_d \circ IS_d)$ is the morphological approximation of the smoothing term from the Euler-Lagrange equation (5). For further details on the operator it is referred to P. Marquez-Neila et al. (cited above).

In order to cope with possible problems of contour-leaking and under-segmentation, and to make the algorithm more generic and less sensitive to the surrounding, the image attachment term according to equation (10) is changed to a binary classifier $L(I)$, also referred to as "binary functional", the value of which (e.g. "true" or "false" or "1" or "0") depending on the Image $I$. Preferably, the binary classifier $L(I)$ is defined by a machine learning classifier that is trained in a supervised manner on feature vectors generated for the particular problem.

Preferably, the image attachment term of equation (10) reads as follows:

$$u^{n+\frac{1}{3}} = \begin{cases} 1, & \text{if } L(I) = true \,\&\, K^{n+\frac{1}{3}}(x) \neq 0 \\ 0, & \text{if } L(I) = false \,\&\, K^{n+\frac{1}{3}}(x) \neq 0 \\ u^{n+\frac{1}{3}}, & \text{otherwise} \end{cases}$$

$$(12)$$

Feature representation for vessel lumen segmentation

It is assumed that a point within the borders of the vessel lumen is given. An image patch with the center located at the given point is extracted, as illustrated by dashed box in Figure 2 (a). The image patch size is preferably large enough to fit the vessel cross-section.

During a training phase, first the positive (inside the vessel) and negative (out-side of the vessel) examples are generated at positions $p_i^j$ for each vessel $j$ (see centers of small bright and dark boxes shown in Figure 2 (b)).

Then it is proceeded as follows:

1. Compute the mean intensities $\mu_c^j$ at the regions around the given points preferably at the very center of the vessels $\rho_c^j = \left( \rho_{c,x}^j, \rho_{c,y}^j \right)$ (see the filled box in the center of the vessel in Figure 2 (b)).

2. For each training position $p_i^j$ compute the mean intensities $\mu_i^j$ their neighborhoods (see small bright and dark boxes in Figure 2 (b)).

3. For each training position $p_i^j$ compute the relative intensity differences between the intensity at the given point preferably at the very center of the vessel and the intensity at the current training position $p_i^j$: $I_i^j = \mu_c^j - \mu_i^j$

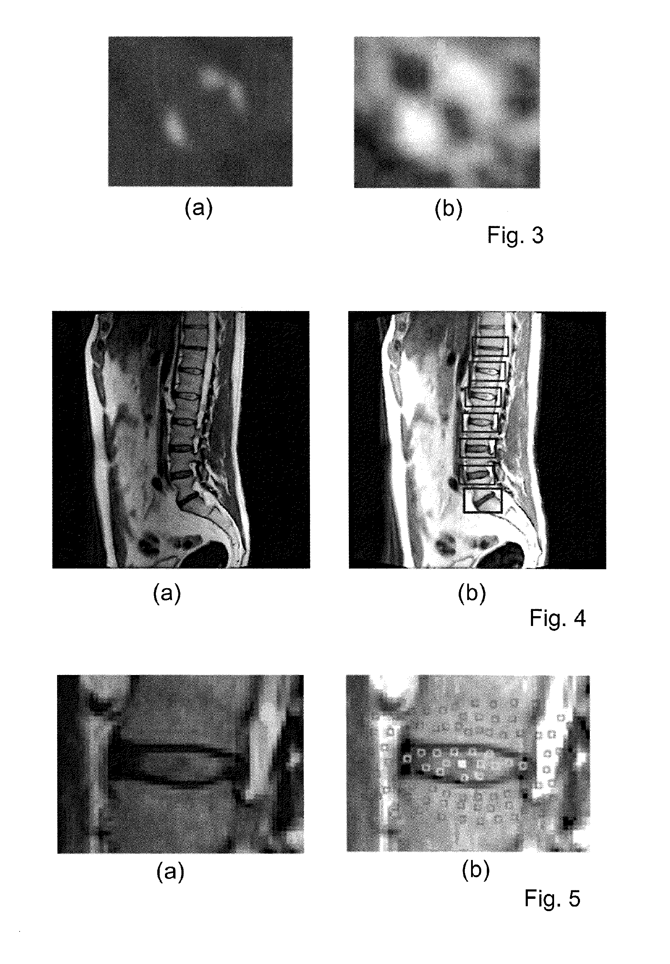

4. For each training position $p_i^j$ compute the entropy values $e_i^j$. High entropies correspond to areas with high variations of intensities. Therefore, they will tend to emphasize the vessel lumen and vessel outer wall borders as well as special areas of ill vessels, like calcifications and plaques, as illustrated in Figure 3 (a) and (b).

5. For each training position $p_i^j$ find the maximal values $M_i^j$ at its neighborhood.

6. Compute distances (in mm) from the current training position $p_i^j$ to the given point preferably at the very center

of the vessel $\rho_c^j$: $d_{i,x}^j = \left\| \left( p_{i,x}^j - \rho_{c,x}^j \right) \right\|$ and $d_{i,y}^j = \left\| \left( p_{i,y}^j - \rho_{c,y}^j \right) \right\|$.

7. Feature vectors $f_i^j = \left( e_i^j, I_i^j, d_{i,x}^j, d_{i,y}^j, M_i^j \right)$ are used then for training the classifier *L(I)* from equation (12).

Feature representation for intervertebral disc segmentation

Similarly to the training phase for vessel lumen segmentation it is assumed that one point inside each intervertebral disc is given. An image patch around each position is extracted afterwards, as illustrated in Figure 4.
The patch size is preferably large enough to fit the corresponding disc and partially the neighboring vertebrae, as illustrated in Figure 5 (a).
Similarly to the feature representations for vessels, the positive (inside the disc) and negative (outside of the disc) examples are generated at the positions $p_i^j$ for each disc *j* (i.e. the centers of bright and dark boxes shown in Figure b (b)).
Then it is proceeded as follows:

1. Compute the mean intensities $\mu_c^j$ at the regions around the given points preferably close to the centers of the

discs $\rho_c^j = \left( \rho_{c,x}^j, \rho_{c,y}^j \right)$ (see the filled box at the center of the disc shown in Figure 5 (b)).

2. For each training position $p_i^j$ compute the mean intensities $\mu_i^j$ at their neighborhoods (see bright and dark boxes in Figure 5 (b)).

3. For each training position $p_i^j$ also find two points $p_i^{j,1}$ and $p_i^{j,2}$ above and below in the y-direction in the sagittal plane (e.g. an 18 mm displacement). For each point $p_i^{j,1}$ and $p_i^{j,2}$ compute the mean intensities $\mu_i^{j,1}$

and $\mu_i^{j,2}$ at their neighborhoods.

4. For each training position $p_i^j$ compute two scaled directional intensity derivatives $I_{i,+}^j = \left( \mu_i^j - \mu_i^{j,1} \right)$ and

$I_{i,-}^j = \left( \mu_i^j - \mu_i^{j,2} \right)$.

5. For each training position $p_i^j = \left( p_{i,x}^j, p_{i,y}^j \right)$ compute two distances (in mm): $d_{i,x}^j = \left\| \left( p_{i,x}^j - \rho_{c,x}^j \right) \right\|$ and

$d_{i,y}^j = \left\| \left( p_{i,y}^j - \rho_{c,y}^j \right) \right\|$ to the given point preferably to the center of the disc $\rho_c^j$.

6. Feature vectors $f_i^{\,j} = \left( I_{i,+}^{\,j}, I_{i,-}^{\,j}, d_{i,x}^{\,j}, d_{i,y}^{\,j} \right)$ are used then for training the classifier $L(I)$ from equation (12).

Preferably, as the classifier $L(I)$ the Reduced Error Pruning Tree classifier, also referred to as "REP Tree" or "REP", described in http://weka.sourceforge.net/doc.dev/weka/classifiers/trees/REPTree.html is used. REP Tree is a decision tree based classifier, learned using information gain and pruned considering classification error reduction in a cross-validation scheme. For details regarding REP it is referred to J. R. Quinlan, Simplifying decision trees, in: International journal of man-machine studies, 27(3):221-234, 1987, which is incorporated by reference herewith.

Results and Summary

In order to show the effectiveness of the approach according to the first example, a comparison with the performance of its constituents alone, namely MACWE and REP, was made.

To evaluate REP the leave-one-out cross-validation scheme was used. To evaluate MACWE it was simply run on all datasets, i.e. it did not require any training.

It was surprisingly found that the approach according to the first example considerably outperforms its two constituent parts, when using them alone, on both vessel and spine datasets.

Although the REP alone shows satisfactory results on both datasets, false positive classifications can occur. The MACWE alone can be used for vessel lumen segmentation, however it often leaks or includes calcifications. In particular, it performs very poorly for the intervertebral disc segmentation task and shows acceptable results only in cases where nuclei are degenerated.

Last but not least, the method according to the first example outperforms other methods in terms of a number of validation measures, which are more correct in anatomical terms, i.e. validation measures that show how similar and close (in mm) the segmented region is to the ground-truth segmentation.

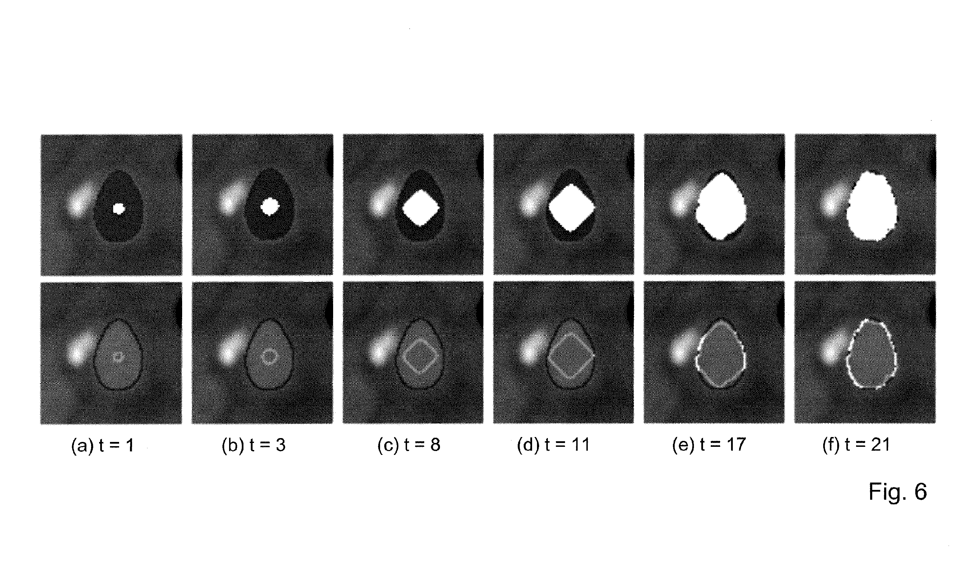

Figure 6 illustrates how the algorithm according to the first example converges towards the vessel lumen borders. Every column corresponds to a different iteration of the algorithm. The upper row shows full segmentation and the ground-truth masks. The lower row shows only the contours. As expected, the algorithm excludes the calcifications (bright blob on the left).

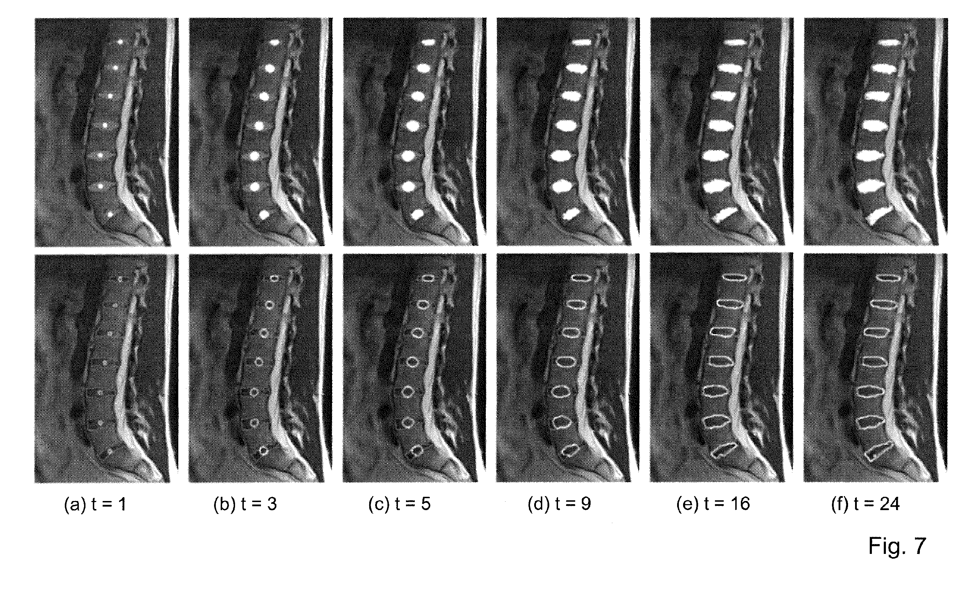

Figure 7 illustrates the convergence of the algorithm on the spine data. Every column corresponds to a different iteration of the algorithm. The upper row shows the full segmentations and the ground-truth masks and the lower row contains only the contours.

In summary, by way of the first example a generic algorithm for segmentation of anatomical structures in medical images is described. The approach is easy to implement. It is robust and shows particularly good results on vessel and spine data.

II. Second Example

Similarly to the first example, the segmentation method according to a second example is based on an active contour without edges (ACWE), which is modified by a morphological approach (MACWE). According to an aspect of the invention, the MACWE segmentation algorithm is further modified and enhanced by machine learning approaches as elucidated in detail in the following.

Morphological Active Contour Without Edges

Regarding the active contour without edges (ACWE) function of a curve C, the optimization problem to be solved, the Euler-Lagrange equation for the functional and the morphological approximation (MACWE) of the ACWE algorithm it is referred to equations (1) to (11) and respective elucidations given in above regarding the first example.

In order to simplify parameter tuning, preferably only one parameter $\lambda$ instead of two parameters $\lambda_1$ and $\lambda_2$ in the conditional inequality of the image attachment term according to equation (9) is used:

$$K^{n+\frac{1}{3}}(x) = \left| \nabla u^{n+\frac{1}{3}}(x) \right| \left( \left( I(x) - c_1 \right)^2 - \lambda \left( I(x) - c_2 \right)^2 \right), \qquad (13)$$

where $I(x)$ is the intensity at voxel $x$, $c_1$ and $c_2$ are the intensity means inside and outside of the contour $C$ and the

parameter $\lambda$ gives more weight to the second term of equation (13). The parameter $\lambda$ controls that more voxels are considered for attachment to the segmented region by the classifier, i.e. more control is given to the classifier.

Assuming that $A=\{1,...,M\}$ is the set of all labels in the given segmentation problem, and $N^+ \subseteq A$ is the set of all labels which the algorithm aims to segment. Preferably, $L(x)$ is defined to be a multi-label classifier that assigns the most probable label from the set $A$ to a voxel $x$ :

$$L(x) = \arg\max_{k \in A} P(x \in k) , \qquad (14)$$

where $P(x \in k)$ is the probability of the voxel $x$ being assigned to the label $k$.

Preferably, by using the multi-label classifier $L(x)$ the following new image attachment term is obtained:

$$u^{n+\frac{2}{3}}(x) = \begin{cases} 1, & if \ L(x) \in N^+ \wedge K^{n+\frac{1}{3}}(x) > |\varepsilon| \\ 0, & if \ L(x) \notin N^+ \wedge K^{n+\frac{1}{3}}(x) > |\varepsilon| \\ u^{n+\frac{1}{3}}, & K^{n+\frac{1}{3}}(x) \leq |\varepsilon| \end{cases} , \qquad (15)$$

where $\varepsilon$ is a small tolerance parameter $\approx 0$.

That is, instead of using a binary classifier according to the first example, in the algorithm according to the second example a multi-label classifier $L(x)$ is used.

Similarly to the first example, the multi-label classifier $L(x)$ is trained preliminarily on a set of field-specific contextual features, wherein the learned classifier drives MACWE towards the desired segmentation of the object, e.g. the vessel and/or intervertebral disc.

Feature representation

Basically, regarding feature representation for vessel lumen and intervertebral disc segmentation, the above elucidations on the algorithm according to the first example apply accordingly.

Preferably, a set of simple features is used for solving three different medical imaging problems. The set of common features include: Euclidean distances to the starting point (preferably a point at the center of a disc or a vessel lumen) and directional intensity differences. Further, two additional features for the vessel problem are introduced, i.e. it is aimed to segment the vessel lumen only excluding calcifications and plaques. Therefore, only two labels are used in the $N^+$ set. Moreover, the entropy feature was added and the maximal intensity value feature is empirically selected to guarantee inclusion of the border of the vessel lumen.

Classification

For the classification step, preferably a decision tree-based algorithm called Reduced Error Pruning Tree, Naive Bayes or Random Forest classifiers are used. Regarding the Reduced Error Pruning Tree, also referred to as "REP Tree" or "REP", the elucidations given in section "I. First Example" above apply accordingly.

Implementation Optimizations

In order to improve performance of the algorithm for all morphological and classification tasks at any given iteration, preferably the search region for new voxels is restricted to attach to the current segmentation. Only voxels within a bounding box is considered, which slightly exceeds the size of the bounding box of the current segmented structure. Inactive voxels, i.e. voxels not belonging to the segmented mask, within the dataset are therefore not considered, which drastically boosts the computational performance.

Results and Summary

The algorithm according to the second example is particularly suited for segmentation of intervertebral discs in 2D and 3D MRI images, and segmentation of the lumen in 2D vessel cross-sectional planes in CTA images.

For training datasets and data from the "Carotid Lumen Segmentation Challenge 2009" (K. Hameeteman et al., Evaluation framework for carotid bifurcation lumen segmentation and stenosis grading, Medical Image Analysis, 15(4):477-488, 2011) and the "Intervertebral Disc Localization and Segmentation Challenge 2015" (C. Chen et al., Localization and segmentation of 3d intervertebral discs in MR images by data driven estimation, Medical Imaging, IEEE Transactions on, PP(99):1-1, 2015), average dice values of 88.57 % for lumens, 83.24 % for all discs in all slices in 2D, 78.28 % and maximum value of 84.2 % were achieved for discs in 3D.

In summary, the second example relates to a learning-based active contour model for segmentation of anatomical structures in 2D and 3D. The approach is built upon a Morphological Active Contour Without Edges (MACWE) which is enhanced by using a multi-label classifier, which is trained preliminarily on a set of field-specific contextual features and drives MACWE towards the desired segmentation of the object. For the classification task, REP, Naive Bayes or Random Forest classifiers are used in conjunction with MACWE. By implementing optimizations for morphological and classification operations in the algorithm performance can be further boosted.

The algorithm according to the second example differs from the algorithm according to the first example as follows:

- only one parameter $\lambda$ is used in the image attachment term according to equation (13), instead of two parameters $\lambda_1$ and $\lambda_2$ in the first example;
- a multi-label classifier (see equation (14)) is used instead of a binary, i.e. a two-label, classifier;
- the image attachment term according to equation (15) differs from the one according to equation (12) of the first example;
- the algorithm according to the first example is particularly suited for 2D images of vessels and intervertebral discs, whereas the algorithm according to the second example is particularly applicable to both 2D and 3D images; and
- in the algorithm according to the first example decision trees are used for classification, whereas in the second example evaluations in conjunction with three classification methods are performed, i.e. REP-Tree, Naive Bayes or Random Forest.

## Claims

1. A method for segmentation of anatomical structures in medical images, wherein an anatomical structure represented in a medical image (15) is segmented by applying an algorithm based on a morphological active contour without edges (MACWE) to the medical image (15), wherein in the algorithm based on the morphological active contour without edges one or more features relating to a surrounding and/or context of the anatomical structure represented in the medical image (15) are considered.

2. The method according to claim 1, wherein the one or more features relating to the surrounding and/or context of the anatomical structure are considered by classifying the surrounding and/or context of the anatomical structure represented in the medical image.

3. The method according to claim 2, wherein the surrounding and/or context of the anatomical structure represented in the medical image is classified by applying a classifier (L) to the medical image.

4. The method according to claim 3, wherein the classifier (L) is obtained by training the classifier (L) with feature vectors ($f^i_j$) relating to a surrounding and/or context of anatomical structures in a set of training images.

5. The method according to claim 3 or 4, wherein the classifier (L) is a multi-label classifier.

6. The method according to any of the claims 3 to 5, wherein the classifier (L) is a binary classifier.

7. The method according to any of the claims 2 to 6, wherein the algorithm based on the morphological active contour without edges comprises the step of applying a morphological operator to the medical image, wherein the morphological operator applied to the medical image depends on the result of the classification of the surrounding and/or context of the anatomical structure represented in the medical image.

8. The method according to claim 7, wherein the morphological operator corresponds to an image attachment term of the algorithm based on the morphological active contour without edges.

9. An apparatus (10) for segmentation of anatomical structures in medical images, said apparatus comprising an image processing unit (13) which is configured to segment an anatomical structure represented in a medical image (15) by applying an algorithm based on a morphological active contour without edges (MACWE) to the medical image (15), wherein in the algorithm based on the morphological active contour without edges one or more features relating to a surrounding and/or context of the anatomical structure represented in the medical image (15) are considered.

10. A system for segmentation of anatomical structures in medical images (15) comprising:

- a medical imaging apparatus (12) configured to acquire medical images (15) of anatomical structures, and
- an apparatus (10) according to preceding claim.

Fig. 1

(a)  (b)

Fig. 2

(a)       (b)

Fig. 3

(a)       (b)

Fig. 4

(a)       (b)

Fig. 5

Fig. 6

(a) t = 1  (b) t = 3  (c) t = 8  (d) t = 11  (e) t = 17  (f) t = 21

(a) t = 1        (b) t = 3        (c) t = 5        (d) t = 9        (e) t = 16        (f) t = 24

Fig. 7

Europäisches
Patentamt

European
Patent Office

Office européen
des brevets

# EUROPEAN SEARCH REPORT

Application Number

EP 15 18 4647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MARQUEZ-NEILA PABLO ET AL: "A Morphological Approach to Curvature-Based Evolution of Curves and Surfaces", IEEE TRANSACTIONS ON PATTERN ANALYSIS AND MACHINE INTELLIGENCE, IEEE COMPUTER SOCIETY, USA, vol. 36, no. 1, 1 January 2014 (2014-01-01), pages 2-17, XP011532081, ISSN: 0162-8828, DOI: 10.1109/TPAMI.2013.106 [retrieved on 2013-11-25] | 1,9,10 | INV. G06T7/00 |
| Y | * abstract * <br> * section 4.1, equation (29) * <br> * section 4.2, equation (32); page 10 * | 1-10 | |
| X | ZEYNETTIN AKKUS ET AL: "Semi-automated segmentation of pre-operative low grade gliomas in magnetic resonance imaging", CANCER IMAGING, vol. 99, no. 7, 14 August 2015 (2015-08-14), page 1, XP055258050, DOI: 10.1186/s40644-015-0047-z * abstract * <br> * page 4, right-hand column - page 5, right-hand column * <br> * equations (1) and (2) * | 1-10 | |

TECHNICAL FIELDS SEARCHED (IPC)

G06T

-/--

The present search report has been drawn up for all claims

| Place of search | Date of completion of the search | Examiner |
|---|---|---|
| Munich | 15 March 2016 | Zikic, Darko |

EPO FORM 1503 03.82 (P04C01)

Europäisches
Patentamt

European
Patent Office

Office européen
des brevets

# EUROPEAN SEARCH REPORT

Application Number

EP 15 18 4647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KARTEEK POPURI ET AL: "3D variational brain tumor segmentation on a clustered feature set", MEDICAL IMAGING 2002: PACS AND INTEGRATED MEDICAL INFORMATION SYSTEMS: DESIGN AND EVALUATION, vol. 7259, 26 February 2009 (2009-02-26), page 72591N, XP055258153, 1000 20th St. Bellingham WA 98225-6705 USA ISSN: 0277-786X, DOI: 10.1117/12.811029 ISBN: 978-1-5106-0167-3 * abstract * * section 2 * ----- | 1-10 | |

TECHNICAL FIELDS
SEARCHED (IPC)

The present search report has been drawn up for all claims

| Place of search | Date of completion of the search | Examiner |
|---|---|---|
| Munich | 15 March 2016 | Zikic, Darko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                           

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. F. CHAN ; B. SANDBERG ; L. A. VESE.** Active contours without edges for vector-valued images. *Journal of Visual Communication and Image Representation,* 2000, vol. 11 (2), 130-141
- **P. MARQUEZ-NEILA ; L. BAUMELA ; L. ALVAREZ.** A morphological approach to curvature-based evolution of curves and surfaces. *IEEE Transactions on Pattern Analysis and Machine Intelligence,* 2014, vol. 36 (1), 2-17

- **J. R. QUINLAN.** Simplifying decision trees. *International journal of man-machine studies,* 1987, vol. 27 (3), 221-234
- **K. HAMEETEMAN et al.** Evaluation framework for carotid bifurcation lumen segmentation and stenosis grading. *Medical Image Analysis,* 2011, vol. 15 (4), 477-488
- **C. CHEN et al.** Localization and segmentation of 3d intervertebral discs in MR images by data driven estimation. *Medical Imaging, IEEE Transactions on,* 2015, 1-1